# EUROPÄISCHE PATENTSCHRIFT

(11) **EP 2 755 318 B1**
(45) Veröffentlichungstag und Bekanntmachung des Hinweises auf die Patenterteilung: **28.03.2018**
(21) Anmeldenummer: 14000087.8
(22) Anmeldetag: 10.01.2014
(51) Int. Cl.: H02P 6/00, E06B 9/72

(54) **Jalousiensystem**
Blind system
Système de volets

(30) Priorität: 11.01.2013 DE 102013000397
(43) Veröffentlichungstag der Anmeldung: 16.07.2014
(73) Patentinhaber: CONTROLtronic GmbH, 80992 München (DE)
(72) Erfinder: Messner, Markus, 80639 München (DE)
(74) Vertreter: Behr, Wolfgang

(56) Entgegenhaltungen:
- EP-A1- 0 483 528
- EP-A1- 1 553 690
- EP-A2- 2 228 885
- EP-A2- 2 256 284
- EP-A2- 2 383 416
- FR-A1- 2 972 872
- US-A1- 2009 090 805

## Beschreibung

Die vorliegende Erfindung betrifft ein Jalousiesystem mit einer Jalousie, einem Motor zum Bewegen der Jalousie, und mit zwei Anschlüssen zur Verbindung mit einer externen Steuerung, welche die Ansteuerung über das Ein- und Ausschalten und/oder die Polwendung einer Gleichspannung vornimmt.

Solche Jalousiesysteme können beispielsweise für Außenjalousien, für Innenjalousien oder für zwischen den Isolierglasscheiben eines Fensters angeordnete Jalousien eingesetzt werden. Besonders bevorzugt betrifft die vorliegende Erfindung dabei Jalousiesysteme, welche in ein Fenster integriert werden können.

Bei bekannten Jalousien werden dabei üblicherweise Gleichstrommotoren eingesetzt, welche über eine zweiadrige Versorgungsleitung angesteuert werden. Durch Polwendung kann dabei die Drehrichtung des Motors geändert werden. Die Verstellung der Lamellen in die jeweilige Richtung wird jeweils zu Beginn einer Fahrt über die Mitnahme der Leiterkordel realisiert. Dabei ist bereits bekannt, ein solches Jalousiesystem mit einer Steuerelektronik zur Ansteuerung des Gleichstrommotors auszustatten, welche beispielsweise zu Beginn einer Fahrt die Verfahrgeschwindigkeit verlangsamt.

Solche Systeme haben den Vorteil, dass sie keine komplexe externe Ansteuerung erfordern, und lediglich eine zweiadrige Versorgungsleitung erfordern. Allerdings sind die im Stand der Technik eingesetzten Gleichstrommotoren aufgrund ihrer Ausgestaltung mit Bürsten einem gewissen Verschleiß ausgesetzt. Dies ist gerade beim Einbau eines Jalousiesystems ins Isolierglas problematisch, da das Jalousiesystem bzw. der Motor nicht einfach ausgetauscht werden können.

Druckschrift EP 2 256 284 A2 zeigt einen Antrieb für eine Jalousie, der in der Lage sein soll, leicht eine Stoppposition der Jalousie einzustellen und ferner eine Verschiebung der eingestellten Stoppposition zu verhindern. Der Antrieb umfasst einen Gleichstrommotor, welcher über einen Polaritätswahlschalter mit einer externen Gleichstromquelle verbunden ist. In einem Stopppositions-Einstellmodus wird die durch einen Sensor erfasste Anzahl an Umdrehungen des Äntriebsmotors in einem Speicher gespeichert. Im Normalmodus wird die gespeicherte Anzahl von Umdrehungen zurückgeführt und die Stromversorgung des Antriebs gestoppt, wenn die erfasste Anzahl von Umdrehungen erreicht wurde. Weiterhin ist angegeben, dass statt des Gleichstrommotors ein bürstenloser Motor eingesetzt werden könnte.

Weitere Antriebe sind aus den Druckschriften US 2009/0090805 A1, EP 2 228 885 A2, FR 2 972 872 A1, EP 1 553 690 A1 und EP 483 528 A1 bekannt.

Aufgabe der vorliegenden Erfindung ist es daher, die Lebensdauer eines Jalousiesystems zu erhöhen, ohne die Vorteile bekannter Jalousiesysteme aufgeben zu müssen.

Erfindungsgemäß wird diese Aufgabe durch ein Jalousiesystem gemäß Anspruch 1 gelöst.

Das erfindungsgemäße Jalousiesystem umfasst eine Jalousie, einen Motor zum Bewegen der Jalousie, und zwei Anschlüsse zur Verbindung mit einer externen Steuerung. Das erfindungsgemäße Jalousiesystem kann dabei mit einer externen Steuerung betrieben werden, welche die Ansteuerung über das Ein- und Ausschalten und/oder die Polwendung einer Gleichspannung vornimmt. Erfindungsgemäß handelt es sich bei dem Motor jedoch anders als im Stand der Technik um einen bürstenlosen Motor. Dabei weist das Jalousiesystem eine Steuerelektronik zur Ansteuerung des bürstenlosen Motors auf, welche die Ansteuerspannung über die Anschlüsse erhält und ein Drehfeld zum Ansteuern des Motors erzeugt. Dabei sind in der Steuerelektronik Sollwerte für die Geschwindigkeit abgelegt, mit welcher die Jalousie verfahren wird.

Die vorliegende Erfindung erlaubt damit den Austausch des üblicherweise eingesetzten Gleichstrommotors mit Kohlebürsten durch einen bürstenlosen Motor, welcher einen im Wesentlichen verschleißfreien Betrieb erlaubt und damit die Lebensdauer des Jalousiesystems erheblich erhöht. Das für die Ansteuerung des bürstenlosen Motors notwendige Drehfeld wird durch die Steuerelektronik zur Verfügung gestellt. Dabei ist die Steuerelektronik so ausgestaltet, dass sie weiterhin mit einer externen Steuerung, wie sie aus dem Stand der Technik bekannt ist, zusammenwirken kann.

Bei dem erfindungsgemäßen bürstenlosen Motor handelt es sich insbesondere um einen bürstenlosen Gleichstrommotor. Solche Motoren weisen üblicherweise einen Rotor mit Permanentmagneten auf, während die Spulen zum Erzeugen des Drehfeldes am Stator angeordnet sind. Die Steuerelektronik sorgt dabei dafür, dass die Spulen so nacheinander mit Strom versorgt werden, dass der Rotor eine gewünschte Drehbewegung durchführt.

Bei dem erfindungsgemäßen Gleichstrommotor kann es sich dabei um einen sensorlosen oder um einen mit Positionssensoren ausgestalteten Gleichstrommotor handeln. Bevorzugt ist der Gleichstrommotor mit Sensoren, insbesondere Hall-Sensoren zur Erkennung der Position des Rotors ausgestattet.

Weiterhin bevorzugt ermittelt die Steuerelektronik die Position des Rotors, wobei diese Ermittlung entweder aus einem Sensorsignal oder aus dem Stromverbrauch der Spulen ermittelt werden kann.

In einer bevorzugten Ausführungsform wertet die Steuerelektronik mindestens eine Eigenschaft der an den Anschlüssen anliegenden Ansteuerspannung der externen Steuerung aus und nimmt die Ansteuerung des bürstenlosen Motors anhand dieser Auswertung vor. Insbesondere kann hierdurch die Ansteuerung des bürstenlosen Gleichstrommotors in gleicher Weise erfolgen wie die Ansteuerung eines Gleichstrommotors mit Bürsten.

Bevorzugt schließt die Steuerelektronik dabei aus dem Anliegen einer Steuerspannung, dass ein Verfahren der Jalousie gewünscht ist, und steuert den Motor entsprechend an. Dabei kann vorgesehen sein, dass die Steuerelektronik bei einem Anlegen der Ansteuerspannung aufwacht und die Jalousie verfährt.

Weiterhin kann vorgesehen sein, dass die Steuerelektronik die gewünschte Drehrichtung aus der Polarität der Ansteuerspannung ermittelt und den Motor entsprechend ansteuert. Je nach Polarität der Ansteuerspannung verfährt die Steuerelektronik die Jalousie damit bei einem Einschalten der Gleichspannung in die eine oder in die andere Richtung.

Bevorzugt speichert die Steuerelektronik dabei bei einem Ausschalten der Ansteuerspannung die aktuelle Position der Jalousie. Wird die Steuerspannung wieder eingeschaltet, kennt die Steuerung damit die aktuelle Position der Jalousie.

Dabei kann vorgesehen sein, dass die Steuerelektronik die Jalousie nur bis zu einer Endposition verfährt, und den Motor bei Erreichen dieser Endposition auch dann stoppt, wenn weiterhin eine Ansteuerspannung anliegt. Die Endpositionen können dabei beispielsweise in einem Einlernmodus durch Heranfahren an Endanschläge ermittelt werden, beispielsweise aus der sich dann erhöhenden Aufnahmeleistung des Motors. Die Endpositionen werden dann vorteilhafterweise in einem gewissen Abstand zu den so ermittelten Endanschlägen gesetzt.

In einer bevorzugten Ausführungsform erfolgt die Energieversorgung der Steuerelektronik unabhängig von der Polarität über die Ansteuerspannung. Insbesondere kann dabei vorgesehen sein, dass die Energieversorgungsanschlüsse der Steuerelektronik über einen Gleichrichter mit den Anschlüssen in Verbindung stehen.

Dabei kann weiterhin vorgesehen sein, dass die Steuerelektronik die Polarität der nicht gleichgerichteten Ansteuerspannung überwacht, um hieraus die gewünschte Verfahrrichtung der Jalousie zu ermitteln. Hierfür steht die Steuerelektronik vorteilhafterweise über mindestens eine vor dem Gleichrichter angreifende Messstelle mit den Anschlüssen in Verbindung.

In einer bevorzugten Ausführungsform der vorliegenden Erfindung kann das Jalousiesystem wahlweise in einem ersten Ansteuermodus mit einer externen Steuerung, welche die Ansteuerung des Motors wie oben beschrieben über das Ein- und Ausschalten und/oder die Polwendung einer Gleichspannung vornimmt, betrieben werden, und in einem zweiten Ansteuermodus mit einer externen Steuerung, welche digitale Ansteuerbefehle zur Ansteuerung des Motors an die Steuerelektronik überträgt. Dies hat den Vorteil, dass das erfindungsgemäße Jalousiesystem besonders flexibel eingesetzt werden kann.

Das erfindungsgemäße Jalousiesystem kann damit extrem flexibel eingesetzt werden, und sowohl mit den üblicherweise eingesetzten externen Steuerungen, welche über das Ein- oder Ausschalten einer Gleichspannung erfolgen, als auch über eine digitale Kommunikation mit dann erweiterten Ansteuermöglichkeiten.

Das erfindungsgemäße Jalousiesystem hat damit zum einen den Vorteil, dass es beispielsweise problemlos zum Austausch bestehender Jalousiesysteme eingesetzt werden kann, ohne dass die externe Steuerung ausgetauscht werden müsste. Weiterhin kann das Jalousiesystem, wenn in der Einbausituation mit einer digitalen externen Steuerung betrieben wird, dennoch z. B. bei der Montage oder Reparaturen problemlos einfach durch das Anschließen an eine Gleichstromquelle mit Polwechselmöglichkeit getestet werden, ohne dass hierfür eine digitale externe Steuerung notwendig wäre.

In einer bevorzugten Ausführung des erfindungsgemäßen Jalousiesystems erkennt die Steuerelektronik automatisch, ob sie mit einer ersten oder einer zweiten externen Steuerung verbunden ist, und schaltet demgemäß in den entsprechenden Ansteuermodus. Dies hat insbesondere bei in das Isolierglas eines Fensters integrierten Jalousiesystemen enorme Vorteile, da diese nicht zugänglich sind und daher bspw. auch nicht durch einen Schalter am Jalousiesystem manuell umgeschaltet werden können.

Weiterhin kann das erfindungsgemäße Jalousiesystem so ausgestaltet sein, dass es zumindest zu Teil über die gleichen Anschlüsse mit den beiden unterschiedlichen externen Steuerungen verbunden werden kann. Hierdurch kann die Anzahl der Anschlüsse reduziert werden, was Dichtungsprobleme vermeidet.

Weiterhin kann bei einem erfindungsgemäßen Jalousiesystem vorgesehen sein, dass die Steuerelektronik abspeichert, in welchem Ansteuermodus zuletzt gearbeitet wurde. Insbesondere kann hierfür ein nicht flüchtiger Speicher vorgesehen sein, welcher die Daten auch beim Ausschalten der Versorgungsspannung beibehält. Insbesondere kann eine solche Speicherung bei einem Ausschalten der Ansteuerspannung vorgenommen werden.

Bevorzugt ist dabei vorgesehen, dass die Steuerelektronik bei einem erneuten Einschalten der Gleichspannung zunächst in dem abgespeicherten Ansteuermodus weiter arbeitet. Dies hat insbesondere im Hinblick auf den ersten Ansteuermodus den Vorteil, dass die Steuerelektronik bei einem Einschalten der Gleichspannung sofort reagiert und ein Verfahren der Jalousie vornimmt, wenn zuvor im ersten Ansteuermodus gearbeitet wurde.

Weiterhin kann so auch im zweiten Ansteuermodus die Versorgungsspannung für die Steuerelektronik ausgeschaltet werden, beispielsweise dann, wenn für einen gewissen Zeitraum keine Ansteuerung der Jalousie vorgenommen wurde. Dies erhöht die Lebensdauer der Ansteuerelektronik. Wird die Versorgungsspannung dann wieder eingeschaltet, weiß die Steuerelektronik dennoch, dass sie sich im zweiten Ansteuermodus befindet, und wartet auf digitale Befehle, um die Ansteuerung vorzunehmen. Ohne eine Abspeicherung des Ansteuermodus würde die Steuerung dagegen bei einem Einschalten der Versorgungsspannung immer davon ausgehen, dass ein Verfahren der Jalousie gewünscht ist.

In einer bevorzugten Ausführungsform der vorliegenden Erfindung überwacht die Steuerelektronik die Steuerleitung auf die Übertragung von digitalen Ansteuerbefehlen. Vorteilhafterweise erfolgt diese Überwachung dabei ständig, wenn eine Versorgungsspannung für die Steuerelektronik anliegt.

Dabei kann vorgesehen sein, dass die Steuerelektronik bei einem Ausbleiben von digitalen Ansteuerbefehlen für eine vorgegebene Zeitspanne automatisch in den ersten Ansteuermodus schaltet.

Hierbei kann vorgesehen sein, dass die externe Steuerung zyklisch Lebenszeichen über die Steuerleitung überträgt, so dass die Steuerelektronik weiß, dass weiterhin im zweiten Ansteuermodus gearbeitet wird. Bleiben solche Lebenszeichen über einen gewissen Zeitraum aus, schließt die Steuerelektronik daraus, dass nunmehr im ersten Ansteuermodus gearbeitet wird, und verfährt die Jalousie in Abhängigkeit von der Polarität der anliegenden Spannung.

Dies hat den Vorteil, dass dann, wenn die Jalousie zuvor mit einer digitalen externen Steuerung betrieben wurde, und nun beispielsweise zu Testzwecken eine herkömmliche externe Steuerung eingesetzt wird, die Steuerelektronik automatisch nach einer gewissen Zeitspanne in den ersten Ansteuermodus umschaltet und durch die herkömmliche externe Ansteuerung angesteuert werden kann.

So kann beispielsweise bei dem Einbau oder der Reparatur eines erfindungsgemäßen Jalousiesystems auf einfachste Art und Weise ein Test der Jalousiefunktion vorgenommen werden, ohne dass hierfür eine digitale externe Steuerung notwendig wäre.

Das erfindungsgemäße Jalousiesystem weist dabei in einer bevorzugten Ausführungsform zwei Anschlüsse auf, welche sowohl zum Betrieb im ersten als auch im zweiten Ansteuermodus mit der jeweiligen externen Steuerung in Verbindung stehen, und mit einem dritten Anschluss, welcher im zweiten Steuermodus eine Übertragung von digitalen Steuerbefehlen erlaubt und bei Ansteuerung über eine konventionelle externe Steuerung ungenutzt bleibt. Hierdurch bedarf es nur eines Minimums an Anschlüssen für das Jalousiesystems.

Dabei kann im ersten Ansteuermodus der Motor durch Ein- und Ausschalten einer Gleichspannung an den zwei Anschlüssen und/oder durch einen Polwechsel der Gleichspannung an den zwei Anschlüssen angesteuert werden. Weiterhin können die ersten zwei Anschlüsse im zweiten Ansteuermodus der Stromversorgung dienen, während die Ansteuerbefehle zur Ansteuerung des Motors über den dritten Anschluss empfangen werden. Insbesondere können dabei die ersten zwei Anschlüsse im zweiten Ansteuermodus ausschließlich der Stromversorgung dienen, während die Ansteuerung des Jalousiesystems ausschließlich über die digitalen Ansteuerbefehle erfolgt.

In einer weiteren bevorzugten Ausführungsform ist die Ansteuerelektronik des erfindungsgemäßen Jalousiesystems über eine bidirektionale Schnittstelle mit einer externen Steuerung verbindbar. Eine solche bidirektionale Schnittstelle erlaubt dabei eine Vielzahl von Zusatzfunktionen, welche bei aus dem Stand der Technik bekannten Jalousiesystemen nicht gegeben sind.

Vorteilhafterweise wird die bidirektionale Schnittstelle dabei über einen dritten Anschluss der Steuerelektronik zur Verfügung gestellt.

Eine solche bidirektionale Schnittstelle erlaubt dabei eine Vielzahl von neuen Ansteuermöglichkeiten.

Die erfindungsgemäß vorgesehene bidirektionale Kommunikation kann dabei das Übertragen von Werten zum Zustand der Jalousie ermöglichen. Insbesondere kann so eine entsprechende Rückmeldung auf die Ansteuerung erfolgen. Insbesondere können dabei Werte zur Höhe und/oder zum Lamellenwinkel von der Ansteuerelektronik zur externen Steuerung übertragen werden.

Weiterhin kann vorgesehen sein, dass die bidirektionale Kommunikation das Auslesen von Werten aus der Steuerelektronik erlaubt. So kann beispielsweise vorgesehen sein, dass Werte eines Betriebsstundenzählers ausgelesen werden können.

Weiterhin kann vorgesehen sein, dass die bidirektionale Kommunikation ein Schreiben und/oder Auslesen von Werten der Parametrisierung der Steuerelektronik erlaubt. Bei den Parametern der Steuerelektronik, welche geschrieben und/oder ausgelesen werden können, kann es sich beispielsweise um vorgegebene Fahr-und/oder Wendegeschwindigkeiten handeln.

Weiterhin kann vorgesehen sein, dass die bidirektionale Kommunikation das Auslesen von Messwerten eines mit der Steuerelektronik in Verbindung stehenden Sensors erlaubt. Hierdurch können nützliche Zusatzinformationen ermittelt werden. Beispielsweise kann es sich dabei um einen Temperatursensor handeln, über welchen bei einem ins Isolierglas integrierten Jalousiesystem die Temperatur im Isolierspalt gemessen werden kann.

Weiterhin kann die bidirektionale Kommunikation eine Diagnose des Jalousiesystems ermöglichen. Beispielsweise können dabei Diagnoseabfragen durchgeführt werden, beispielsweise zum Stromverbrauch des Motors, zur Fehlermeldungen der Steuerelektronik, etc.

Die gemäß dem zweiten Aspekt vorgesehene bidirektionale Kommunikation kann dabei auch unabhängig von der gemäß dem ersten Aspekt vorgesehenen Wahlweisen Ansteuerung in einem ersten oder in einem zweiten Ansteuermodus eingesetzt werden.

Insbesondere kann eine solche bidirektionale Kommunikation dabei auch bei solchen Jalousiesystemen eingesetzt werden, bei welchen die Ansteuerung des Motors (ggf. ausschließlich) über das Ein- und Ausschalten und/oder die Polwendung einer Gleichspannung erfolgt. Vorteilhafterweise erfolgt die Ansteuerung dabei so, wie dies oben im Hinblick auf den ersten Ansteuermodus näher beschrieben wurde.

Weiterhin kann die bidirektionale Kommunikation auch bei solchen Jalousiesystemen eingesetzt werden, bei welchen die Ansteuerung des Jalousiesystems (ggf. ausschließlich) über digitale Ansteuerbefehle erfolgt. Vorteilhafterweise erfolgt die Ansteuerung dabei so, wie dies oben im Hinblick auf den zweiten Ansteuermodus näher beschrieben wurde.

Besonders bevorzugt kommt die gemäß dem zweiten Aspekt vorgesehene bidirektionale Kommunikation jedoch bei Jalousiesystemen zum Einsatz, welche wie oben beschrieben in einem ersten und in einem zweiten Ansteuermodus betrieben werden können. Vorteilhafterweise ist das Jalousiesystem gemäß dem zweiten Aspekt damit so ausgestaltet, wie dies oben im Hinblick auf den ersten Aspekt näher dargestellt wurde.

Dabei kann vorgesehen sein, dass die bidirektionale Kommunikation im zweiten Ansteuermodus erfolgt. Jedoch ist auch eine bidirektionale Kommunikation unabhängig vom zweiten Ansteuermodus denkbar, beispielsweise zu Diagnosezwecken.

Vorteilhafterweise erfolgt die bidirektionale Kommunikation dabei über den dritten Anschluss.

In einer weiteren bevorzugten Ausführungsform weist das erfindungsgemäße Jalousiesystem zwei Anschlüsse auf, welche zumindest auch der Energieversorgung der Steuerelektronik dienen, und einem dritten Anschluss, welcher eine digitale Kommunikation zwischen externer Steuerung und Steuerelektronik in zumindest eine Richtung, und bevorzugt eine bidirektionale Kommunikation, ermöglicht.

Insbesondere kann bei einem erfindungsgemäßen Jalousiesystem eine digitale Kommunikationsmöglichkeit von der externen Steuerung zur Steuerelektronik des Jalousiesystems vorgesehen sein.

Die Kommunikation von der externen Steuerung zur Steuerelektronik kann dabei die Übertragung von Höhen- und/oder Winkelvorgaben für die gewünschte Jalousieposition erlauben. Insbesondere kann dies im zweiten Ansteuermodus erfolgen.

Weiterhin kann die Kommunikation von der externen Steuerung zur Steuerelektronik die Parametrisierung der Steuerelektronik erlauben. Insbesondere kann dabei eine Vorgabe von gewünschten Fahr- und/oder Wendegeschwindigkeiten vorgenommen werden. Eine solche Parametrisierung ist dabei sowohl für den ersten Ansteuermodus denkbar, als auch in Kombination mit dem zweiten Ansteuermodus.

Weiterhin kann die Kommunikation von der externen Steuerung zur Steuerelektronik die Aktualisierung der Software der Steuerelektronik erlauben. Dies ist insbesondere dann von Vorteil, wenn das Jalousiesystem in ein Isolierglas und/oder Fenster verbaut ist, und so nicht anders zugänglich ist. Auch eine solche Aktualisierung kann sowohl in Kombination mit dem ersten als auch mit dem zweiten Ansteuermodus eingesetzt werden.

Die Kommunikation kann dabei auch dann vorgesehen sein, wenn die Steuerelektronik keinen zweiten Ansteuermodus oder keinen ersten Ansteuermodus vorsieht.

Gemäß einer besonders bevorzugten Ausführungsform der vorliegenden Erfindung bildet das erfindungsgemäße Jalousiesystem eine Baueinheit. Insbesondere können dabei die Steuerelektronik und der Motor in einen Kopfkasten integriert sein. Vorteilhafterweise ist im Kopfkasten auch ein Getriebe und/oder die Mechanik zur Bewegung der Jalousie angeordnet, welche beispielsweise eine Welle zum Aufwickeln der Schnüre, mit welchen die Jalousie bewegt wird, umfassen kann. Weiterhin kann eine Mitnehmerscheibe zum Mitnehmen der Leiterkordel beim Anfahren vorgesehen sein, über welche eine Verstellung des Lamellenwinkels bewirkt wird.

Bevorzugt handelt es sich bei dem Jalousiesystem dabei um ein in ein Fenster integrierbares Jalousiesystem. Vorteilhafterweise verläuft die Jalousie dabei innerhalb des Isolierglases.

Insbesondere kann das gesamte Jalousiesystem mitsamt dem Kopfkasten zusammen mit Abstandshaltern zwischen den Glasscheiben einer Isolierglasscheibe angeordnet werden. Weiterhin kann der Kopfkasten zusammen mit den Abstandshaltern am Außenumfang der Isolierglasscheibe durch eine Dichtmasse luftdicht versiegelt werden. Vorteilhafterweise sind die Anschlüsse dabei so ausgeführt, dass sie durch diese Dichtmasse hindurch reichen. Insbesondere können die Anschlüsse dabei als vorstehende Metallstifte ausgeführt sein.

Bevorzugt weist das erfindungsgemäße Jalousiesystem maximal drei Anschlüsse auf, besonders bevorzugt genau drei Anschlüsse. Hierdurch können Dichtungsprobleme vermieden werden.

Die vorliegende Erfindung umfasst neben dem erfindungsgemäßen Jalousiesystem weiterhin eine Steuerelektronik für ein Jalousiesystem, wie sie oben beschrieben wurde. Insbesondere handelt es sich bei der Steuerelektronik dabei um eine Steuerplatine, welche beispielsweise im Kopfkasten eines erfindungsgemäßen Jalousiesystems anordenbar ist.

Die vorliegende Erfindung umfasst weiterhin ein Set aus einer externen Steuerung und einer erfindungsgemäßen Steuerelektronik, und/oder ein Set aus einer externen Steuerung und einem erfindungsgemäßen Jalousiesystem.

Vorteilhafterweise sind die Steuerelektronik bzw. das Jalousiesystem dabei jeweils so ausgeführt, wie dies oben beschrieben wurde.

Die vorliegende Erfindung umfasst weiterhin ein Bauset für ein Isolierglas mit einem integrierten Jalousiesystem, wobei das Bauset ein Jalousiesystem, wie es oben beschrieben wurde, sowie Abstandshalter für das Isolierglas umfasst. Ein solches Bauset kann dabei an Isolierglashersteller zu Herstellung von Isolierglas oder einem Fensterbauer zur Herstellung von Fenstern mit integriertem Jalousiesystem geliefert werden.

Weiterhin umfasst die vorliegende Erfindung ein Fenster mit einem Jalousiesystem, wie es oben beschrieben wurde, und insbesondere ein Fenster mit einem ins Isolierglas integrierten Jalousiesystem.

Die vorliegende Erfindung wird nun anhand eines Ausführungsbeispiels sowie Zeichnungen näher beschrieben.

Dabei zeigen:
Figur 1: ein Ausführungsbeispiel eines erfindungsgemäßen Jalousiesystems bei einer Ansteuerung in einem ersten Ansteuerungsmodus und
Figur 2: das Ausführungsbeispiel des erfindungsgemäßen Jalousiesystems bei einer Ansteuerung in einem zweiten Ansteuermodus.

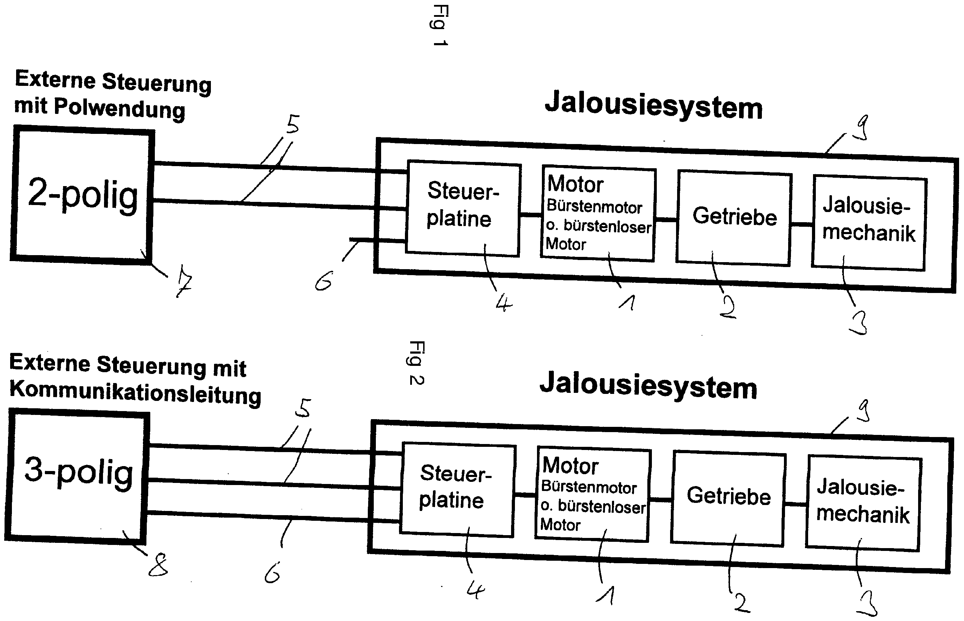

In Figuren 1 und 2 ist ein Ausführungsbeispiel eines erfindungsgemäßen Jalousiesystems schematisch dargestellt. Das Jalousiesystem weist einen Motor 1 auf, welcher über ein Getriebe 2 eine Jalousiemechanik 3 antreibt, welche zum hoch- und herunterfahren der Jalousie eingesetzt wird und die Verstellung der Lamellen vornimmt. Im Ausführungsbeispiel wird die Verstellung der Lamellen über die Mitnahme der Leiterkordel jeweils zu Beginn einer Fahrt realisiert. Die Bewegung der Jalousie sowie die Verstellung der Lamellen erfolgt damit im Ausführungsbeispiel allein über die Ansteuerung des Motors 1.

Erfindungsgemäß ist eine Steuerelektronik 4 in Form einer Steuerplatine vorgesehen, welche den Motor 1 ansteuert. Die Steuerelektronik 4 weist Anschlüsse auf, über welche sie mit einer externen Steuerung verbunden werden kann.

Bei dem erfindungsgemäßen Ausführungsbeispiel sind die Steuerelektronik 4, der Motor sowie Getriebe 2 und Jalousiemechanik 3 in dem schematisch eingezeichneten Kopfkasten 9 angeordnet, von welchem aus sich die Jalousie nach unten erstreckt.

Bevorzugt ist das Jalousiesystem dabei im Isolierglas eines Fensters verbaubar. Dabei wird der Kopfkasten zusammen mit umlaufenden Abstandshaltern zwischen zwei Scheiben des Fensters angeordnet, welche leicht über die Abstandshalter und den Kopfkasten überstehen. Dann wird eine umlaufende Dichtung angebracht, beispielsweise durch Vergießen mit einer Dichtmasse. Der das Jalousiesystem aufnehmende Kopfkasten und die umlaufenden Abstandshalter könne z. B. als Montage-Set an Isolierglashersteller oder Fensterbauer geliefert werden, welche diese mit den Glasscheiben verbinden, abdichten und in die Fenster einbauen.

Die Anschlüsse der Steuerungselektronik müssen dabei durch die Dichtmasse nach außen geführt werden. Hierfür sind im Ausführungsbeispiel Metallstifte vorgesehen, welche aus dem Kopfkasten herausragen und beim Vergießen mit der Dichtmasse von dieser dichtend umgeben werden.

Mögliche Ausführungsbeispiele eines erfindungsgemäßen Jalousiesystems haben dabei zwei oder drei solcher Anschlüsse, so dass auf Grund der geringen Anzahl von Anschlüssen eine hohe Dichtigkeit erreicht werden kann. Das in Figuren 1 und 2 gezeigte bevorzugte Ausführungsbeispiel weist drei Anschlüsse 5, 6 auf.

Die vorliegende Erfindung ist jedoch auch auf Innen- oder Außenjalousien anwendbar.

Im Folgenden sollen drei Aspekte der vorliegenden Erfindung, welche in dem in Figuren 1 und 2 gezeigten Ausführungsbeispiel miteinander kombiniert verwirklicht sind, jeweils gesondert dargestellt werden, da diese drei Aspekte auch jeweils für sich genommen und unabhängig von den anderen Aspekten verwirklicht werden können:

Das in Figuren 1 und 2 gezeigte Ausführungsbeispiel des erfindungsgemäßen Jalousiesystems weist gemäß einem ersten Aspekt drei Anschlüsse auf. Der dreipolige Anschluss der Steuerplatine ermöglicht dabei die Ansteuerung der Jalousie in zwei verschiedenen Betriebsarten.

Zum einen kann die Jalousie in einem ersten Ansteuermodus über die zwei Adern 5 per Polwendung angesteuert werden. Zum anderen kann mit der zusätzlichen Kommunikationsleitung 6 ein zweiter Ansteuermodus mit einer erweiterten Steuerung realisiert werden.

Für die elektrische Ansteuerung des Motors von elektrischen Jalousien wird üblicherweise eine 2-adrige Versorgungsleitung eingesetzt. Durch Einschalten einer Gleichspannung wird der Motor eingeschaltet, durch Ausschalten abgeschaltet. Durch Polwendung der Gleichspannung kann die Drehrichtung des Motors geändert werden.

Das erfindungsgemäße Jalousiesystem kann in dem ersten Ansteuermodus mit einer solchen externen Steuerung angesteuert werden. Hierzu ist die externe Steuerung 7, wie in Figur 1 gezeigt, über die zwei Anschlüsse 5 mit der Steuerelektronik 4 des Jalousiesystems verbunden.

Zusätzlich kann das erfindungsgemäße Jalousiesystem jedoch auch mit einer externen Steuerung 8 eingesetzt werden, welche den Jalousiebetrieb durch digitale Ansteuerbefehle ansteuert. Eine solche Anordnung in Fig. 2 gezeigt. Die externe Steuerung 8 ist dabei so mit den Anschlüssen des Jalousiesystems verbunden, dass über die beiden Anschlüsse 5 die Versorgungsspannung für die Steuerelektronik 4 zur Verfügung gestellt wird, und über den zusätzlichen Anschluss 6 eine Steuerleitung zur digitalen Übertragung von Informationen.

Dabei ist eine automatische Erkennung der Ansteuerung im ersten Ansteuermodus oder im zweiten Ansteuermodus vorgesehen, bzw. der zweipoligen oder dreipoligen Kommunikation .

Das Umschalten zwischen den beiden Ansteuermodi wird im folgenden näher beschrieben:

Die Steuerelektronik 4 des Jalousiesystems arbeitet bei Betriebsaufnahme zunächst im ersten Ansteuermodus, und reagiert damit zunächst auf die Ansteuerung über die beiden Steueradern 5. Die Jalousie wird damit entsprechend der Polarität der an den beiden Anschlüssen 5 anliegenden Gleichspannung bewegt.

Gleichzeitig wird auch dem dritten Anschluss 6 jedoch durchlaufend nach Kommunikationstelegrammen einer externen Steuerung gesucht. Sobald eine entsprechende Kommunikation zwischen externer Steuerung und Steuerelektronik festgestellt wird, wird die Jalousiesteuerung auf den zweiten Ansteuermodus umgestellt.

In diesem zweiten Ansteuermodus dienen die beiden Anschlüsse 5 nur noch der Leistungsversorgung des Jalousiesystems mit Gleichstrom. Die Steuerung des Motors und damit der Jalousie erfolgt dagegen nur noch über direkte Kommunikationstelegramme von der externen Steuerung, z. B. durch Fahr- und Positionsbefehle. Die Kommunikation wird von der externen Steuerung 8 dabei ständig aufrecht erhalten, damit der zweite Steuermodus erhalten bleibt. Insbesondere gibt die externe Steuerung 8 dabei in regelmäßigen Abständen ein Lebenszeichen von sich.

Wird über einen gewissen Zeitraum kein Kommunikationstelegramm von der externen Steuerung empfangen, so wird auf den ersten Ansteuermodus und damit den zweipoligen Betrieb zurückgestellt. Die Jalousie reagiert dann wieder direkt auf die Spannung sowie die Polarität der Versorgungsleitung 5. Erst wenn wieder entsprechende Kommunikation auf dem dritten Anschluss 6 erkannt wird, wird wieder in den zweiten Ansteuermodus mit erweiterter Kommunikation gewechselt.

Damit auch bei einer Ansteuerung im zweiten Ansteuermodus, d. h. mit Übertragung digitaler Befehle auf den dritten Anschluss 6, ein Ausschalten der Versorgungsspannung 5 möglich ist, ohne dass bei einem erneuten Einschalten der Spannung im ersten Ansteuermodus gearbeitet wird, speichert die Steuerelektronik 4 bei einem Ausschalten der Versorgungsspannung 5 den aktuellen Ansteuermodus. Wird die Versorgungsspannung dann wieder eingeschaltet, arbeitet die Ansteuerelektronik zunächst in dem abgespeicherten Ansteuerungsmodus.

Erfolgt das erneute Einschalten der Stromversorgung nach einem Betrieb im zweiten Betriebsmodus daher über eine externe zweipolige Steuerung mit Polwendung, erkennt die Ansteuerelektronik jedoch nach kurzer Zeit aus dem Ausbleiben der Steuertelegramme, dass keine digitale Kommunikation vorliegt, und schaltet in den ersten Steuermodus.

Erfindungsgemäß ist damit eine automatische Umschaltung zwischen den beiden Betriebsarten zweipolig und dreipolig gewährleistet und eine direkte Steuerung über zwei Adern jederzeit und ohne vorherige Umparametrierung der Steuerplatine möglich.

Hierdurch kann die Jalousie bspw. über ein einfaches DC-Netzteil mit Schalter zur Polwendung getestet oder betrieben werden. Weiterhin ermöglicht die dritte Kommunikationsader bei Bedarf automatisch erweiterte Steuerungsmöglichkeiten.

Gemäß einem zweiten Aspekt der vorliegenden Erfindung ist erfindungsgemäß eine bidirektionale Kommunikation zwischen der externen Steuerung 8 und der Steuerelektronik 4 des Jalousiesystems möglich.

Insbesondere kann die bidirektionale Kommunikation dabei wie in Fig. 2 gezeigt über einen dritten Anschluss 6, welcher neben zwei Anschlüssen 5 zur Energieversorgung vorgesehen ist, vorgenommen werden. Der Anschluss der Jalousie erfolgt in diesem Fall dreipolig.

Durch die bidirektionale Kommunikation ist eine Vielzahl von unterschiedlichen Ansteuermöglichkeiten gegeben:

Zum einen sind präzise Positions- und Winkelvorgaben für die gewünschte Jalousieposition zur Ansteuerung des Motors vorgebbar, sowie eine entsprechende Rückmeldung der tatsächlichen Jalousieposition, insbesondere der Jalousiehöhe sowie des Lamellenwinkels. Eine solche Ansteuerung kann dabei insbesondere zur Implementierung eines zweiten Ansteuerungsmodus, wie er oben beschrieben wurde, eingesetzt werden.

Weiterhin ist eine Parametrierung der Steuerelektronik der Jalousie möglich. Z. B. können hierfür gewünschte Fahr- und Wendegeschwindigkeiten eingegeben und / oder ausgelesen werden. Eine solche Parametrierung ist sowohl bei dem oben beschriebenen ersten Betriebsmodus, als auch bei dem oben beschriebenen zweiten Betriebsmodus einsetzbar.

Weiterhin können über die bidirektionalen Kommunikationsmeldungen allgemeine Rückmeldungen z. B. eines Betriebsstundenzählers oder Messwerte von Messfühlern, beispielsweise zur Temperatur in der Jalousie, übertragen werden. Auch dies ist sowohl bei dem ersten, als auch bei dem zweiten Ansteuermodus denkbar.

Weiterhin sind Updates der Firmware der Steuerelektronik des Jalousiesystems über die bidirektionale Kommunikationsleitung möglich. Dies ist insbesondere bei der Verwendung des Jalousiesystems im Isolierglas von großem Vorteil, da hier ein anderer Zugang zur Steuerplatine nicht möglich ist.

Weiterhin ist durch die bidirektionale Kommunikation ein Diagnosebetrieb möglich. Hier können beispielsweise Fehlermeldungen ausgelesen werden. Weiterhin ist denkbar, beispielsweise die Höhe des Ansteuerstroms des Motors zu Diagnosezwecken an die externe Steuerung zu übertragen.

Die erfindungsgemäße bidirektionale Kommunikation gemäß dem zweiten Aspekt wird dabei vorteilhafterweise mit dem ersten Aspekt, d. h. mit der alternativen Ansteuerung zum einen über eine Polwendung und zum anderen über digitale Ansteuerbefehle kombiniert.

Der Einsatz einer solchen bidirektionalen Kommunikationsleitung ist jedoch auch bei Jalousiesystemen denkbar, welche nur über eine Polwendung oder nur digital angesteuert werden. Kann das Jalousiesystem dabei nur über Polwendungen angesteuert werden, kann die bidirektionale Kommunikation z. B. zu Zwecken wie der Parametrierung der Steuerplatine, dem Auslesen von allgemeinen. Rückmeldungen, oder zum Update der Software der Steuerelektronik eingesetzt werden.

Die oben beschriebenen beiden Aspekte können dabei zum einen mit einem Gleichstrommotor mit Bürsten, wie er aus dem Stand der Technik bekannt ist, eingesetzt werden. Um eine Versorgung der Steuerelektronik 4 zu gewährleisten, steht diese dabei vorteilhafterweise über einen Gleichrichter mit den Anschlüssen 5 in Verbindung, und wird damit unabhängig von der Polarität der Steuerspannung versorgt. Über die Messung der Polarität wird dann die gewünschte Drehrichtung erkannt, und der Motor entsprechend angesteuert.

Gemäß einem dritten Aspekt der vorliegenden Erfindung wird der üblicherweise eingesetzte Gleichstrommotor mit Kohlebürsten dagegen durch einen bürstenlosen Motor ersetzt. In diesem Fall ist für die Ansteuerung des Motors die Erzeugung eines Drehfeldes erforderlich. Dies wird erfindungsgemäß über die Steuerelektronik 4 realisiert. Die Steuerelektronik ist dabei so ausgestattet, dass sie in gleicher Weise angesteuert werden kann wie die aus dem Stand der Technik bekannten Gleichstrommotoren mit Kohlebürsten bzw. die entsprechenden Ansteuerelektroniken.

Dabei wird die Ansteuerspannung an den Anschlüssen 5 wie bei einem Gleichstrommotor mit Bürsten ausgewertet, und für den bürstenlosen Motor durch die Steuerelektronik umgesetzt. Die erfindungsgemäße Steuereinheit simuliert damit die Ansteuerbarkeit eines Gleichstrommotors mit Kohlebürsten, und setzt diese für einen bürstenlosen Motor um.

Hierbei wird die angelegte Spannung über einen Gleichrichter unabhängig von der angelegten Polarität für die Versorgung der Steuerplatine zur Verfügung gestellt. Über die Messung der Polarität wird dann die gewünschte Drehrichtung erkannt und für die Steuerplatine ausgewertet. Die Steuerplatine erzeugt dann entsprechend der gewünschten Drehrichtung das Drehfeld für die Ansteuerung des bürstenlosen Motors.

Erfindungsgemäß kann dabei sowohl ein bürstenloser Gleichstrommotor mit Sensoren zur Erkennung der Rotorposition, als auch ein sensorloser bürstenloser Gleichstrommotor eingesetzt werden. Bevorzugt wird dabei ein bürstenloser Motor mit Hall-Sensoren eingesetzt.

Die Steuerelektronik übernimmt dabei die Positionierung der Jalousie anhand der Polarität der angelegten Ansteuerspannung. Dabei sind in der Steuerelektronik Sollwerte für die Geschwindigkeit abgelegt, mit welcher die Jalousie verfahren wird. Weiterhin kann beim Anfahren zunächst mit einer geringen Geschwindigkeit angefahren werden, um so über die Mitnahme der Leiterkordel den Winkel der Lamellen zu verändern. Nach einer gewissen Zeitspanne wird dann auf eine vorgegebene höhere Geschwindigkeit geschaltet.

Die Steuerelektronik erkennt dabei bevorzugt die Position der Jalousie und speichert diese bei einem Abschalten der Ansteuerspannung ab, so dass sie bei dem nächsten Anschalten der Ansteuerspannung zur Verfügung steht. Vorteilhafterweise wird dabei die Position der Jalousie aus der bei bürstenlosen Motoren ohnehin bekannten Position und Bewegung des Rotors des Motors berechnet. Wird also die Ansteuerspannung eingeschaltet, fährt die Jalousie aus dieser Position je nach Polarität in die eine oder andere Richtung.

Vorteilhafterweise sind in der Steuerelektronik dabei Endpositionen für die Jalousie abgespeichert. Ist eine solche Endposition erreicht, so wird der Motor nicht mehr weiter in die entsprechende Richtung betrieben, auch wenn die Ansteuerspannung noch anliegt. Die Endpositionen können dann beispielsweise in einem Einlernmodus durch Heranfahren an Endanschläge bestimmt werden. Die Endpositionen werden dann um eine gewisse Strecke vor diesen Endanschlägen gesetzt, um eine mechanische Überlastung beim Erreichen der Endpositionen zu vermeiden.

Eine Ansteuerung eines bürstenlosen Motors gemäß dem dritten Aspekt kann dabei sowohl im Kombination mit als auch unabhängig von den ersten beiden Aspekten der vorliegenden Erfindung eingesetzt werden.

So kann ein solches Jalousiesystem gemäß dem dritten Aspekt mit nur zwei Anschlüssen für die Ansteuerspannung ausgeführt werden, und nur in einem ersten Ansteuermodus mit Polwendung ansteuerbar sein.

Bevorzugt weist ein erfindungemäßes Jalousiesystem mit einem bürstenlosen Motor gemäß dem dritten Aspekt jedoch ebenfalls einen dritten Anschluss für eine erweiterte Kommunikation auf. Insbesondere können über diesen dritten Anschluss digitale Daten von der externen Steuerung zum Jalousiesystem übertragen werden. Alternativ oder zusätzlich kann auch eine Übertragung von Daten vom Jalousiesystem zur externen Steuerung erfolgen.

Vorteilhafterweise erfolgt die Kommunikation so, wie dies gemäß dem zweiten Aspekt oben näher beschrieben wurde.

Weiterhin kann ein bürstenloser Motors auch bei einem Jalousiesystem gemäß dem ersten Aspekt eingesetzt werden, bei welchem eine wahlweise Ansteuerung über eine zweipolige oder dreipolige externe Steuerung erfolgt.

## Patentansprüche

1. Jalousiesystem (9) mit einer Jalousie, einem Motor (1) zum Bewegen der Jalousie, und mit zwei Anschlüssen zur Verbindung mit einer externen Steuerung, welche die Ansteuerung über das Ein- und Ausschalten und/oder die Polwendung einer Gleichspannung vornimmt, **dadurch gekennzeichnet, dass** es sich bei dem Motor (1) um einen bürstenlosen Motor handelt und dass das Jalousiesystem eine Steuerelektronik zur Ansteuerung des bürstenlosen Motors aufweist, welche die Ansteuerspannung über die Anschlüsse erhält und ein Drehfeld zum Ansteuern des Motors (1) erzeugt, wobei in der Steuerelektronik Sollwerte für die Geschwindigkeit abgelegt sind, mit welcher die Jalousie verfahren wird.

2. Jalousiesystem nach Anspruch 1, wobei die Steuerelektronik mindestens eine Eigenschaft der Ansteuerspannung auswertet und die Ansteuerung des bürstenlosen Motors anhand der Auswertung vornimmt.

3. Jalousiesystem nach Anspruch 2, wobei die Steuerelektronik aus dem Anliegen einer Steuerspannung schließt, dass ein Verfahren der Jalousie gewünscht ist, und den Motor entsprechend ansteuert, wobei beim Anfahren zunächst mit einer geringeren Geschwindigkeit angefahren wird, und nach einer gewissen Zeitspanne auf eine vorgegebene höhere Geschwindigkeit geschaltet wird.

4. Jalousiesystem nach Anspruch 2 oder 3, wobei die Steuerelektronik die gewünschte Drehrichtung aus der Polarität der Ansteuerspannung ermittelt und den Motor entsprechend ansteuert.

5. Jalousiesystem nach einem der vorangegangenen Ansprüche, wobei die Energieversorgung der Steuerelektronik unabhängig von der Polarität über die Ansteuerspannung erfolgt, wobei die Energieversorgungsanschlüsse der Steuerelektronik vorteilhafterweise über einen Gleichrichter mit den Anschlüssen in Verbindung stehen.

6. Jalousiesystem nach Anspruch 5, wobei die Steuerelektronik die Polarität der nicht gleichgerichteten Ansteuerspannung überwacht, wobei die Steuerelektronik vorteilhafterweise über mindestens eine vor dem Gleichrichter angreifende Messstelle mit den Anschlüssen in Verbindung steht.

7. Jalousiesystem nach einem der vorangegangenen Ansprüche, wobei das Jalousiesystem wahlweise in einem ersten Ansteuermodus mit der externen Steuerung, welche die Ansteuerung des Motors über das Ein- und Ausschalten und/oder die Polwendung einer Gleichspannung vornimmt, und in einem zweiten Ansteuermodus mit einer externen Steuerung, welche digitale Ansteuerbefehle zur Ansteuerung des Motors an die Steuerelektronik überträgt, betreibbar ist.

8. Jalousiesystem nach Anspruch 7, wobei die Steuerelektronik automatisch erkennt, ob sie mit einer ersten oder zweiten externen Steuerung verbunden ist, und in den entsprechenden Ansteuermodus schaltet, und/oder wobei die Steuerelektronik abspeichert, in welchem Ansteuermodus zuletzt gearbeitet wurde, und bevorzugt bei einem erneuten Einschalten der Gleichspannung in diesem Ansteuermodus weiterarbeitet und/oder wobei die Steuerelektronik eine Steuerleitung auf die Übertragung von digitalen Ansteuerbefehlen überwacht und vorteilhafterweise bei einem Ausbleiben von digitalen Ansteuerbefehlen für eine vorgegebene Zeitspanne automatisch in den ersten Ansteuermodus schaltet.

9. Jalousiesystem nach einem der Ansprüche 7 oder 8, mit zwei Anschlüssen, welche sowohl zum Betrieb im ersten als auch im zweiten Ansteuermodus mit der externen Steuerung in Verbindung stehen, und mit einem dritten Anschluss, welcher im zweiten Steuermodus eine Übertragung von digitalen Steuerbefehlen erlaubt, wobei vorteilhafterweise im ersten Ansteuermodus der Motor durch Ein- und Ausschalten einer Gleichspannung an den zwei Anschlüssen und/oder einen Polwechsel der Gleichspannung an den zwei Anschlüssen angesteuert wird und/oder wobei im zweiten Ansteuermodus die ersten zwei Anschlüsse der Stromversorgung dienen und die Ansteuerbefehle zur Ansteuerung des Motors über den dritten Anschluss empfangen werden.

10. Jalousiesystem nach einem der vorangegangenen Ansprüche, wobei die Ansteuerelektronik über eine bidirektionale Schnittstelle mit der externen Steuerung verbindbar ist, wobei vorteilhafterweise die bidirektionale Kommunikation das Übertragen von Werten zum Zustand der Jalousie, insbesondere zur Position der Jalousie erlaubt, insbesondere zur Höhe und/oder zum Lamellenwinkel, und/oder wobei vorteilhafterweise die bidirektionale Kommunikation das Schreiben und/oder Auslesen von Werten aus der Steuerelektronik erlaubt, insbesondere Werte eines Betriebsstundenzähler oder Werte der Parametrisierung der Steuerelektronik, und/oder wobei vorteilhafterweise die bidirektionale Kommunikation das Auslesen von Messwerten eines mit der Steuerelektronik in Verbindung stehenden Sensors erlaubt, insbesondere eines Positions- und/oder eines Temperatursensors, und/oder wobei vorteilhafterweise die bidirektionale Kommunikation im zweiten Ansteuermodus möglich ist, und/oder wobei die bidirektionale Kommunikation vorteilhafterweise über den dritten Anschluss erfolgt.

11. Jalousiesystem nach einem der vorangegangenen Ansprüche, wobei die Kommunikation von der externen Steuerung zur Steuerelektronik die Übertragung von Positions- und/oder Winkelvorgaben für die gewünschte Jalousieposition erlaubt, und/oder wobei die Kommunikation von der externen Steuerung zur Steuerelektronik die Parametrisierung der Steuerelektronik erlaubt, insbesondere die Vorgabe von gewünschten Fahr- und/oder Wendegeschwindigkeiten, und/oder wobei die Kommunikation von der externen Steuerung zur Steuerelektronik die Aktualisierung der Software der Steuerelektronik erlaubt.

12. Jalousiesystem nach einem der vorangegangenen Ansprüche, wobei das Jalousiesystem eine Baueinheit bildet, wobei die Steuerelektronik und der Motor vorteilhafterweise in einen Kopfkasten integriert sind und/oder wobei das Jalousiesystem in ein Fenster integrierbar ist, wobei die Jalousie vorteilhafterweise innerhalb des Isolierglases verläuft, und/oder wobei das Jalousiesystem maximal drei Anschlüsse aufweist, bevorzugt genau drei Anschlüsse.

13. Steuerelektronik zur Ansteuerung eines bürstenlosen Motors eines Jalousiesystems mit zwei Anschlüssen zur Verbindung mit einer externen Steuerung, welche die Ansteuerung über das Ein- und Ausschalten und/oder die Polwendung einer Gleichspannung vornimmt, wobei die Steuerelektronik die Ansteuerspannung über die Anschlüsse erhält und ein Drehfeld zum Ansteuern des Motors erzeugt, wobei in der Steuerelektronik Sollwerte für die Geschwindigkeit abgelegt sind, mit welcher die Jalousie verfahren wird.

14. Bauset für ein Isolierglas mit einem integrierten Jalousiesystem, wobei das Bauset ein Jalousiesystem nach einem der Ansprüche 1 bis 12 und Abstandshalter für das Isolierglas umfasst.

15. Fenster mit einer Isolierglasscheibe und mit einem Jalousiesystem nach einem der Ansprüche 1 bis 12, wobei das Jalousiesystem in die Isolierglasscheibe integriert ist, wobei vorteilhafterweise das Jalousiesystem zusammen mit Abstandshaltern zwischen den Glasscheiben der Isolierglasscheibe angeordnet ist und die Isolierglasscheibe am Außenumfang durch eine Dichtmasse luftdicht versiegelt ist, durch welche die Anschlüsse hindurch reichen, wobei die Anschlüsse bevorzugt als vorstehende Metallstifte ausgeführt sind.

## Claims

1. Blind system (9) with a blind, a motor (1) for moving the blind, and with two terminals for connection with an external control, which performs the actuation via the switching on and off and/or the pole reversal of a DC voltage,
**characterized in that**
the motor (1) is a brushless motor, and **in that** the blind system comprises a control electronics for the actuation of the brushless motor, which receives the drive voltage through the terminals and generates a rotating field for driving the motor (1), wherein target values for the speed are stored in the control electronics, with which the blind is displaced.

2. Blind system according to claim 1, wherein the control electronics evaluates at least one characteristic of the drive voltage and performs the actuation of the brushless Motor based on the evaluation.

3. Blind system according to claim 2, wherein the control electronics concludes from a control voltage being applied, that displacement of the blind is desired, and correspondingly actuates the motor, wherein, during the start-up, is initially started up with a low speed, and after a certain period of time, is switched to a preset higher speed.

4. Blind system according to claims 2 or 3, wherein the control electronics determines the desired direction of rotation from the polarity of the drive voltage, and correspondingly actuates the motor.

5. Blind system according to one of the preceding claims, wherein the energy supply of the control electronics occurs independently of the polarity via the drive voltage, wherein the energy supply terminals of the control electronics are advantageously in contact with the terminals via a rectifier.

6. Blind system according to claim 5, wherein the control electronics monitors the polarity of the non-rectified drive voltage, wherein the control electronics is advantageously in contact with the terminals via at least one measuring point taking effect in front of the rectifier.

7. Blind system according to one of the preceding claims, wherein the blind system is selectively operable in a first drive mode with the external control, which performs the actuation of the motor via the switching on and off and/or the pole reversal of a rectifier, and in a second drive mode with an external control, which transmits digital drive commands to the control electronics for the actuation of the motor.

8. Blind system according to claim 7, wherein the control electronics automatically recognizes if it is connected with a first or second external control, and switches in the corresponding drive mode, and/or wherein the control electronics stores which drive mode had last been worked in, and preferably, when switching on again, continues to work in said mode, and/or wherein the control electronics monitors a control line on the transmission of digital drive commands, and, preferably, in an absence of digital drive commands, automatically switches into the first drive mode for a predetermined period of time.

9. Blind system according to one of the claims 7 or 8, with two terminals, which communicate to operate in the first, as well as also in the second drive mode with the external control, and with a third terminal, which allows for a transmission of digital control commands in the second control mode, wherein, in the first drive mode, the motor advantageously, through switching on and off of a rectifier, is driven to the two terminals, and/or wherein, in the second drive mode, the first two terminals serve for power supply, and the drive commands for the driving of the motor are received via a third terminal.

10. Blind system according to one of the preceding claims, wherein the drive electronics can be connected with the external control via a bidirectional interface, wherein advantageously, the bidirectional communication allows for the transmission of values for the state of the blind, in particular for the position of the blind, in particular for the height and/or for the slat angle, and/or wherein the bidirectional communication advantageously permits the writing and/or selection of values from the control electronics, in particular values of an operating hours counter or values of the parametrization of the control electronics, and/or wherein the bidirectional communication advantageously permits the reading of the measured values of a sensor in contact with the control electronics, in particular a position and/or temperature sensor, and/or wherein the bidirectional communication is advantageously enabled in the second drive mode, and/or wherein the bidirectional communication is advantageously effected via the third terminal.

11. Blind system according to one of the preceding claims, wherein the communication from the external control to the control electronics permits the transmission of position and/or angle settings for the desired blind position, and/or wherein the communication from the external control to the control electronics permits the parametrization of the control electronics, in particular the pre-setting of desired travelling and turning speeds, and/or wherein the communication from the external control to the control electronics permits the updating of the software.

12. Blind system according to one of the preceding claims, wherein the blind system forms a structural unit, wherein the control electronics and the motor are advantageously integrated in a headbox, and/or wherein the blind system can be integrated in a window, wherein the blind advantageously runs within the insulating glass, and/or wherein the blind system comprises a maximum of three terminals, preferably exactly three terminals.

13. Control electronics for the actuating of a brushless motor of a blind system with two terminals for connecting with an external control, which performs the actuation via witching on or off, and/or the pole reversal of a direct voltage, wherein the control electronics generates the drive voltage via the terminals and generates a rotating field for driving the motor, wherein target values for the speed are stored in the control electronics, with which the blind is moved.

14. Construction kit for a double glass with an integrated blind system, wherein the construction kit includes a blind system according the one of the claims 1 to 12 and spacers for the insulating glass.

15. Window with an insulating glass panel and with a blind system according to one of the claims 1 to 12, wherein the blind system is integrated into the insulating glass panel, wherein the blind system, together with spacing elements, is advantageously arranged between the glass panels of the insulating glass panel and the insulating glass panel is sealed in a manner to be air-tight via a sealing mass, through which the terminals extend, wherein the terminals are preferably configured as projecting metal pins.

## Revendications

1. Système de volets (9) comprenant un store vénitien, un moteur (1) destiné à mouvoir le store vénitien et deux raccordements pour la connexion à une commande externe, qui réalise l'entraînement par la mise sous/hors tension et/ou par l'inversion de polarité d'une tension continue,
**caractérisé en ce que**
le moteur (1), est un moteur sans balai et que le système de stores vénitien présente un système électronique de commande destiné à l'activation du moteur sans balais, lequel système reçoit la tension de commande par l'intermédiaire des raccordements et génère un champ tournant pour l'activation le moteur (1), les valeurs de consigne pour la vitesse sont stockées dans le système électronique de commande, par moyen duquel le système de volets est déplacé.

2. Système de volets selon la revendication 1, dans lequel le système électronique de commande évalue au moins une caractéristique de la tension contrôle et réalise l'activation du moteur sans balais sur la base de l'évaluation.

3. Système de volets selon la revendication 2, dans lequel le système électronique de commande conclut de l'application d'une tension de contrôle qu'un déplacement de store vénitien est souhaité, et qui fait l'activation du moteur de manière appropriée, en démarrant d'abord par une plus faible vitesse et, après un certain période de temps, en basculant à une vitesse supérieure prédéterminée.

4. Système de volets selon la revendication 2 ou 3, dans lequel le système électronique de commande détermine le sens de rotation souhaité à partir de la polarité de la tension de commande et qui fait l'activation du moteur de manière appropriée.

5. Système de volets selon l'une quelconque des revendications précédentes, dans lequel l'alimentation en énergie du système électronique de commande se fait, indépendamment de la polarité, via la tension de commande les raccordements d'alimentation en énergie du système électronique de commande étant avantageusement en contact avec les raccordements par l'intermédiaire d'un redresseur.

6. Système de volets selon la revendication 5, dans lequel le système électronique de commande surveille la polarité de la tension de commande qui n'est pas redressée, le système électronique de commande étant avantageusement en contact avec les raccordements par l'intermédiaire d'au moins un point de mesure prendre effet avant le redresseur.

7. Système de volets selon l'une quelconque des revendications précédentes, le système de volets étant au choix utilisable dans un premier mode d'entraînement à l'aide de la commande externe, qui met en oeuvre l'activation du moteur par la mise sous tension et hors tension et/ou l'inversion de polarité d'une tension continue, et dans un deuxième mode d'entraînement à l'aide d'une commande externe, qui transmet des instructions d'entraînement numériques destinées à l'activation du moteur au système électronique de commande.

8. Système de volets selon la revendication 7, dans lequel le système électronique de commande détecte automatiquement s'il est connecté à une première ou une deuxième commande externe, et bascule sur le mode d'entraînement approprié et/ou dans lequel le système électronique de commande enregistre, dans quel mode d'entraînement il a travaillé en dernier, et de préférence, lors d'une nouvelle mise sous tension en tension continue, il continue à fonctionner dans ce mode d'entraînement et/ou dans lequel le système électronique de commande surveille une ligne de commande sur la transmission des instructions d'entraînement numériques, et se commute automatiquement, de manière avantageuse, en cas d'absence d'instructions de commande numériques pendant un intervalle de temps prédéterminé, dans le premier mode d'entraînement.

9. Système de volets selon l'une quelconque des revendications 7 ou 8 comprenant deux raccordements, qui sont en contact avec la commande externe lors du fonctionnement dans le premier mais aussi dans le deuxième mode d'entraînement et comportant un troisième raccordement qui permet une transmission d'instructions de commande numériques dans le deuxième mode d'entraînement, dans le premier mode d'entraînement du moteur, le moteur étant entraîné par la mise sous tension et hors tension d'une tension continue au niveau des deux raccordements et/ou une inversion de polarité de la tension continue au niveau des deux raccordements, et/ou les deux premières raccordements dans le deuxième mode d'entraînement servant à l'alimentation en courant, et les instructions d'entraînement étant reçues pour l'entraînement du moteur par moyen du troisième raccordement.

10. Système de volets selon l'une quelconque des revendications précédentes, dans lequel le système électronique de commande est relié par l'intermédiaire d'une interface bidirectionnelle à la commande externe, la communication bidirectionnelle permettant, de manière avantageuse, le transfert de valeurs sur l'état du store vénitien, en particulier concernant sa position, en particulier sa hauteur et/ou l'angle des lamelles et/ou la communication bidirectionnelle permettant, de manière avantageuse, l'écriture et/ou la lecture des valeurs depuis le système électronique de commande, notamment des valeurs d'un compteur d'heures de fonctionnement ou des valeurs sur la configuration du système électronique de commande, et/ou la communication bidirectionnelle permettant de manière avantageuse, la lecture des valeurs mesurées d'un capteur en contact avec le système électronique de commande, en particulier un capteur de position et/ou de température, et/ou la communication bidirectionnelle étant possible, de manière avantageuse, dans un second mode d'entraînement, et/ou la communication bidirectionnelle est avantageusement effectuée via le troisième raccordement.

11. Système de volets selon l'une quelconque des revendications précédentes, dans lequel la communication de la commande externe vers le système électronique de commande permet la transmission des spécifications de la position et/ou d'angles pour la position désirée du store vénitien, et/ou dans lequel la communication de la commande externe vers le système électronique de commande permet le paramétrage du système électronique de commande, en particulier la spécification des vitesses de course et/ou de rotation désirées, et/ou dans lequel la communication de la commande externe vers le système électronique de commande permet de mettre à jour le logiciel du système électronique de commande.

12. Système de volets selon l'une quelconque des revendications précédentes, le système de volets formant une unité structurelle, où le système électronique de commande et le moteur sont avantageusement intégrés dans une caisse de tête et/ou le système de volet pouvant être intégré dans une fenêtre, le store vénitien se déroulant avantageusement dans la vitre isolante, et/ou le système de volets présentant un maximum de trois raccordements, de préférence exactement trois raccordements.

13. Système de commande électronique destiné à entraîner un moteur sans balais d'un système de volets comprenant deux raccordements en contact avec une commande externe, qui met en oeuvre l'entraînement via la mise sous tension et hors tension et/ou l'inversion de polarité d'une tension continue, le système électronique de commande recevant la tension de commande par l'intermédiaire des raccordements et générant un champ tournant pour entraîner le moteur (1), les valeurs de consigne pour la vitesse étant stockées dans le système électronique de commande, grâce auquel le système de volets est actionné.

14. Kit de construction pour vitrage isolant avec un système de volets intégré, le kit de construction comprenant un système de volets selon l'une quelconque des revendications 1 à 12 et des espaceurs pour le verre isolant.

15. Fenêtre avec une vitre isolante et un système de volets selon l'une quelconque des revendications 1 à 12, le système de volets étant intégré dans la vitre isolante, le système de volets étant avantageusement agencé conjointement avec des espaceurs entre les plaques de verre de la vitre isolante et la vitre isolante étant scellée de manière étanche à l'air par une masse d'étanchéité appliquée sur la périphérie extérieure, à travers laquelle les raccordements s'étendent, les raccordements sont conçus de préférence sous la forme de tiges métalliques saillantes.
